# EUROPÄISCHE PATENTSCHRIFT

(11) **EP 1 786 737 B1**
(45) Veröffentlichungstag und Bekanntmachung des Hinweises auf die Patenterteilung: **24.11.2010**
(21) Anmeldenummer: 05784643.8
(22) Anmeldetag: 18.08.2005
(51) Int. Cl.: C03B 19/08, C03B 25/08

(54) **SCHAUMGLASKÜHLSTRECKE**
FOAMED GLASS COOLING RUN
SECTION DE REFROIDISSEMENT DE VERRE MOUSSE

(30) Priorität: 19.08.2004 DE 102004040307
(43) Veröffentlichungstag der Anmeldung: 23.05.2007
(73) Patentinhaber: glapor GmbH & Co. KG, 4910 Ried im Innkreis (AT)
(72) Erfinder: Frank, Walter, 92637 Weiden (DE)
(74) Vertreter: Raible, Thilo
(86) Internationale Anmeldenummer: PCT/EP2005/054091
(87) Internationale Veröffentlichungsnummer: WO 2006/018448

(56) Entgegenhaltungen:
- DE-A1- 3 920 573
- DE-B- 1 049 549
- US-A- 2 322 581
- US-A- 3 288 584
- US-A- 4 303 437
- US-A- 5 647 882
- US-A- 5 888 263

## Beschreibung

### Technisches Umfeld

Die vorliegende Erfindung betrifft eine Vorrichtung und ein Verfahren zur Herstellung von Schaumglasplatten nach dem Oberbegriff des Anspruchs 8 bzw. 1.

Schaumglas ist seit längerem bekannt. In der EP 12 114 B1 ist ein Verfahren zur Herstellung von Schaumglas-Granulat beschrieben. Nach diesem Verfahren wird ein Gemisch aus fein gemahlenem Glasmehl und einem pastenförmigen Blähmittel aus Wasser, Wasserglas, Glyzerin und Natriumbentonit hergestellt, welches getrocknet und anschließend nach Zusatz einer weiteren Menge Glasmehl in einem Gliederbandofen gebläht wird. Die Mischung aus Blähmittel und Glasmehl wird hierbei mittels eines Endlosförderbandes durch einen Ofen bewegt, so dass sich durch Hitzeeinwirkung unter Mitwirkung des Blähmittels ein Schaumglasstrang bildet, bei dem die Glaspartikel unter Einschluss einer Vielzahl von Poren zusammen gesintert sind. Dieser Schaumglasstrang zerfällt am Ofenausgang infolge der inneren Spannungen in eine Vielzahl kleiner Körner, den sog. Schotter.

Dieser Schotter kann mittels Bindemittel zu einem Formteil zusammengefügt werden, wie beispielsweise in der EP 0945412 B 1 beschrieben ist.

Ferner ist ein Verfahren zur Herstellung von einstückigen Schaumglasplatten bekannt, bei welchem das Glasmehl mit dem entsprechenden Blähmittel in entsprechenden Formen aufgenommen ist, wobei dann die Formen mit dem Blähmittel und Glasmehl der Wärmebehandlung unterzogen werden. Das aufgeschäumt Glas wird dann nach dem Abkühlen aus der Form entnommen und mittels Sägen in entsprechende Platten geschnitten. Nachteil dieses Verfahrens ist, dass Formen verwendet werden müssen, die befüllt und wieder geleert werden müssen und dass zusätzlich die einzelnen Blöcke aus Schaumglas in entsprechende Platten geschnitten werden müssen. Außerdem weist dieses bekannte Verfahren den Nachteil auf, dass als Ausgangsstoff neu hergestelltes Glas verwendet wird, welches vorher zu Glasmehl gemahlen werden muss.

Aus den Dokumenten US 2,322,581 und US 3,288,584 ist die Möglichkeit bekannt, anschließend an die Herstellung eines kontinuierlichen Schaumglasstranges einen Abkühlofen vorzusehen, um durch gezielte Abkühlung des Schaumglasstranges eine kontinuierliche Herstellung von Schaumglasplatten zu ermöglichen. Allerdings fehlt es im Stand der Technik an Angaben, wie eine derartige Abkühlung durchgeführt werden soll, um erfolgreich entsprechende Schaumglasplatten zu erhalten.

Aus der DE 1 049 549 ist ein Verfahren zum Kühlen von Flachglas bekannt, bei dem die Kühlluft unter Verwendung eines gegen die Förderrichtung des Glases verlaufenden Axialluftstroms quer zur Förderrichtung umgewälzt wird.

### Offenbarung der Erfindung

### Technisches Problem

Es ist Aufgabe der vorliegenden Erfindung ein Verfahren und eine Vorrichtung bereitzustellen, mittels der in einfacher und wirtschaftlicher Weise Platte bzw. allgemein Formprodukte in einstückiger Weise aus Schaumglas hergestellt werden können, wobei also nicht mehr einzelne Schaumglaskörper oder Partikel durch ein zusätzliches Bindemittel miteinander verbunden werden müssen.

### Technische Lösung

Diese Aufgabe wird gelöst durch ein Verfahren bzw. eine Vorrichtung, bei welcher ein kontinuierlich produzierter Schaumglasstrang beispielsweise vergleichbar zur EP 012114 am Ende des Durchlaufofens nicht abgeschreckt, sondern kontrolliert gekühlt wird, um innere Spannungen zu vermeiden, die zu einem Zerreißen und Zerbrechen des Schaumglas-Strangs führen würden. Somit wird an den Durchlaufofen, beispielsweise einem Gliederbandofen, bei dem das Gemisch aus Glasmehl und Blähmittel zu Schaumglas aufgeschäumt wird, ein Abkühlofen angeschlossen, der über eine lange Strecke den Glasstrang kontinuierlich abkühlt.

Am Ende des Abkühlofens wird der Glasstrang dann senkrecht zur Förderrichtung geschnitten, so dass aus dem Strang einzelne Platten gefertigt werden.

Der Strang kann hierbei vorzugsweise zusätzlich entlang der Förderrichtung seitlich oder an der Ober- und Unterseite bzw. an einer oder mehreren Stellen verteilt über die Breite des Glasstrangs geschnitten werden, um mehrere Platten mit definierten Grenzflächen zu erhalten. Beispielsweise kann ein entsprechender Strang mit einer Breite im Bereich von 0,5 m bis 4,00 m, insbesondere Im bis 2 m vorzugsweise im Bereich von 1,40 m bis 1,60 m in der Mitte geteilt und nach jeweils 1,00 m Förderweg geschnitten werden, so dass Platten mit einer Breite von 0,5 bis 0,75 m und einer Länge von 1,00 m entstehen. Die Dicke der Platten kann sich im Bereich von 10 mm bis 150 mm, vorzugsweise 40 mm bis 120 mm, insbesondere 50 mm bis 100 mm bewegen, so dass auch eine entsprechende kontinuierliche Trennung über der Dicke der Platte durchgeführt werden kann. Es sind jedoch auch andere Abmessungen möglich, insbesondere größere Breiten.

Als Schneidmittel kommen hier insbesondere Diamantsägen in Betracht, die beispielsweise für die Schnitte längs der Förderrichtung in Art einer Kreissäge am Ausgang des Abkühlofens angeordnet sein können.

Zum Trennen des Schaumglasstranges in Querrichtung kann eine computergesteuerte Säge vorgesehen sein, die sich während des Schneidvorgangs mit der Fördergeschwindigkeit des Schaumglases in Förderrichtung bewegt und zusätzlich quer über den Schaumglasstrang zum Schneiden desselben bewegt wird. Auf diese Weise können unterschiedliche Schnittlängen für die zu vereinzelnden Platten eingestellt werden. Beispielsweise können unterschiedliche Längen im Bereich von 0,5 m bis 2,00 m, insbesondere 1,00 m ausgeführt werden.

Der Vorteil des erfindungsgemäßen Verfahrens liegt in der kontinuierlichen Durchführung der Abkühlung und der Schneidprozesse, so dass auf das aufwändige Formfüllen und Entformen sowie das Schneiden einzelner Blöcke verzichtet werden kann. Vielmehr erfolgt alles in einem kontinuierlichen Prozess, so dass die Effektivität stark erhöht wird.

Der Abkühlofen zur Durchführung des Verfahrens weist entsprechende Heiz- und/oder Kühlorgane auf, die eine definierte Temperatureinstellung ermöglichen, insbesondere quer in Richtung der Strangbreite aber auch entlang der Förderrichtung und somit entlang der Abkühlstrecke.

Insbesondere wird lediglich ein Temperaturgradient in Längs- bzw. Transportrichtung eingestellt, die Temperatur jedoch über der Breite und Dicke des Schaumglasbandes im Wesentlichen konstant ist. Dadurch ergibt sich der Vorteil, dass Spannungen in Querrichtung nicht auftreten und lediglich ein entsprechender Spannungsausgleich durch langsame Abkühlung in Transportrichtung gewährleistet werden muss.

Die Abkühlung in Transportrichtung erfolgt hierbei so, dass das entlang der Transportrichtung laufende Schaumglas zunächst in einer ersten Kühlgeschwindigkeit von der Schäumtemperatur auf eine obere Entspannungstemperatur und anschließend von der oberen Entspannungstemperatur mit einer zweiten Kühlgeschwindigkeit auf eine untere Entspannungstemperatur und anschließend von der unteren Entspannungstemperatur mit einer dritten Kühlgeschwindigkeit auf annähernd Raumtemperatur abgekühlt wird, wobei hier die Transportgeschwindigkeit des Schaumglases konstant ist und lediglich der entsprechende Temperaturgradient in der zugeordneten Kühlzone des Abkühlofens bzw. der Kühlstrecke entsprechend eingestellt wird.

Die drei Bereiche der Abkühlung stellen sicher, dass die insbesondere bei Schaumglas durch den hohen Anteil an Poren erforderliche gleichmäßige Wärmeübertragung an das Kühlmedium sichergestellt ist.

Vorzugsweise wird hierbei die Abkühlgeschwindigkeit im zweiten Bereich, also bei der Abkühlung von der oberen Entspannungstemperatur zur unteren Entspannungstemperatur am niedrigsten gewählt, so dass hier die geringste Kühlrate vorliegt. Dies ist deshalb vorteilhaft, weil insbesondere in dem Temperaturbereich zwischen der oberen Entspannungstemperatur und der unteren Entspannungstemperatur die bleibenden Eigenspannungen aufgebaut werden, so dass hier ein besonders guter Temperaturausgleich innerhalb des Glases und eine entsprechend langsame Abkühlung des Schaumglases erforderlich ist.

Die Temperaturen für die obere Entspannungs- und untere Entspannungstemperatur werden durch die Viskositäten des eingesetzten Glases bzw. Schaumglases bestimmt. Üblicherweise liegt die Schäumungstemperatur im Bereich der Viskosität von 10⁷ bis 10⁸ dPa s, besonders 10^{7,6} dPa s so dass die obere Entspannungstemperatur bei einer Viskosität im Bereich von 10^{12,5} bis 10^{13,5} dPa s, insbesondere 10¹³ dPa s gewählt wird, während die zweite Entspannungstemperatur im Bereich von 10¹⁴ bis 10¹⁵ dPa s, insbesondere 10^{14,5} dPa s, ist.

Bei den Abkühlgeschwindigkeiten ist vorzugsweise darauf zu achten, dass die Abkühlgeschwindigkeiten, insbesondere die zweite Abkühlgeschwindigkeit so niedrig gewählt werden, dass der Temperaturausgleich zwischen der in den Poren eingeschlossenen Luft und dem umgebenden Glas gewährleistet ist, so dass keine Eigenspannungen durch Temperaturunterschiede innerhalb der porösen Schaumglasstruktur induziert werden. Da Luft eigentlich ein sehr guter Isolator ist, ist mit entsprechend niedrigen Abkühlgeschwindigkeiten zu verfahren, wobei diese in Kauf genommen werden können, da die niedrigsten Abkühlgeschwindigkeiten in vorteilhafter Weise auf den Bereich zwischen oberer Entspannungstemperatur und unterer Entspannungstemperatur beschränkt sind, so dass für die industrielle Anwendung akzeptable Abkühlzeiten erreicht werden können.

Die Kühlung erfolgt vorzugsweise über ein Kühlmedium (Fluid), welches am Schaumglasstrang vorbei geleitet wird. Das Kühlmedium, insbesondere Luft oder aber auch andere Medien, wie Inertstoffe, welche v. a. in den heißen Bereichen auf Temperaturen im Bereich des zu kühlenden Schaumglases aufgeheizt werden müssen, werden erfindungsgemäß in einer hochturbulenten Strömung an der Oberfläche des Schaumglasbandes und/oder den entsprechenden Transportorganen vorbeigeführt, so dass ein Temperaturaustausch oder Wärmeübergang zwischen Kühlmedium und Schaumglas stattfinden kann. Durch die hochturbulente Strömung wird sichergestellt, dass mit einer vergleichsweise geringen Menge an Volumenstrom ein guter Wärmeübergang sichergestellt wird, da von dem vorbeigeleiteten Kühlmedium nahezu alles mit der Oberfläche des zu kühlenden Schaumglases in Kontakt gelangt.

Vorzugsweise wird das Kühlmedium in Längsrichtung über das Schaumglasband geführt, wobei die Längskonvektion entweder parallel oder antiparallel sowie diagonal bzw. in einem spitzen Winkel zur Transportrichtung erfolgen kann. Die hochturbulente Strömung soll hierbei vorzugsweise über den gesamten Breiten- als auch über den gesamten Längsquerschnitt aufrechterhalten werden, wobei durch eine Unterteilung der Kühlstrecke in verschiedene Segmente mit jeweils einzelnen Kühleinrichtungen dies gewährleistet wird.

Die Aufteilung der Kühlstrecke in Segmente hat weiterhin den Vorteil, dass sie vom Grundaufbau ähnlich gestaltet werden können, was den Aufbau vereinfacht. Darüber hinaus können in einzelnen Segmenten auch unabhängig voneinander eingerichtete Transportfördereinrichtungen vorgesehen sein, was ebenfalls den Aufbau vereinfacht. Durch die jeweils getrennte Einrichtung von Heiz- bzw. Kühleinrichtungen in den einzelnen Segmenten können diese auch separat und unabhängig voneinander gesteuert und geregelt werden.

Vorzugsweise sind die Heiz- bzw. Kühlmittel so ausgebildet, dass sie Förderleitungen für das Kühlmedium (Fluid) umfassen, mittels derer das Kühlmedium zu Verteileinrichtungen innerhalb der Kühlstrecke geleitet wird, welche das Kühlmedium in den Abkühlofen abgeben.

Nach einer vorteilhaften Ausführungsform sind diese Verteileinrichtungen in Form von Sammelrohren ausgeführt, die entsprechende Ausgabeöffnungen bzw. Düsen aufweisen, die insbesondere bezüglich ihrer Abgabeöffnung einstellbar, insbesondere verschließbar sind und zwar unabhängig voneinander.

Vorzugsweise sind diese Öffnungen in den Verteileinrichtungen bzw. dem Sammelrohr mit ihrer Abgabeöffnung quer zur Einströmrichtung des Kühlmedium angeordnet, so dass durch das Ausströmen bereits eine Verwirbelung des Kühlmediums stattfindet.

Die hochturbulente Strömung wird dadurch aufrecht erhalten, dass entsprechende Turbulenz- oder Prallelemente in der Kühlstrecke vorgesehen sind, die eine Ablenkung des Kühlmittelstroms und Verwirbelung desselben bewirken.

An den Eintrittsstellen des Kühlmediums in die Verteilereinrichtungen können in vorteilhafter Weise die Heizmittel, wie z. B. Gas- oder Ölbrenner, Elektroheizung, Strahlungsheizungen u. dgl. vorgesehen sein, so dass eine indirekte Beheizung der Kühlstrecke stattfindet. Allerdings ist es auch vorstellbar, entsprechende Heizelemente auch direkt in der Kühlstrecke vorzusehen.

Zusätzlich zu den Verteilvorrichtungen, mittels der das Kühlmedium in den Abkühlofen eingeführt wird, sind vorzugsweise Absaugvorrichtungen vorgesehen, die den Kühlmittelstrom aus dem Abkühlofen wieder entfernen und zwar insbesondere segmentweise. Entsprechend sind die Verteilervorrichtungen sowie die Absaugvorrichtungen bevorzugt entlang der Schaumglastransportstrecke einander gegenüberliegend und mit ihren Öffnungen aufeinander zuweisend ausgerichtet. Da die Öffnungen, sowohl der Verteilervorrichtungen als auch der Absaugvorrichtungen, verstellbar hinsichtlich ihres Öffnungsquerschnitts oder der Durchflussmenge sind sowie zudem auch verschließbar sind, kann mit diesen Einrichtungen sowohl ein p aralleler als ein antiparalleler Längsstrom des Kühlmittels als auch ein diagonaler Strom des Kühlmittels eingestellt werden. Zudem können die Kühlmittelvolumina, die entlang der Schaumglasförderanlage strömen über die Breite des Schaumglasstranges variiert werden, so dass beispielsweise an den sich früher abkühlenden Rändern des Schaumglasstranges ein geringerer Kühlmittelstrom eingestellt werden kann.

Vorzugsweise wird das in einzelnen Segmenten oder Abschnitten bzw. Zonen der Kühlstrecke abgesaugte Kühlmittel in anderen Bereichen nach entsprechender Temperatureinstellung oder unmittelbar wieder zugesetzt, so dass das in einem kühleren Abschnitt bereits aufgeheizte Kühlmittel in energiesparender Weise wieder verwertet werden kann.

Aus energetischen Gründen ist es auch vorteilhaft eine wärmekapazitätsarme Ausführung der Transportorgane und der Kühlmittelzu- bzw. -ableitorgane vorzusehen, da damit Energie zum Aufheizen dieser Komponenten eingespart werden kann. Vorzugsweise ist deshalb die Maschenweite der Schaumglastransporteinrichtung, welche vorzugsweise in der Form eines endlos umlaufenden Drahtgliederbandes ausgeführt ist, so groß, dass die Wärmekapazität minimal wird, während gleichzeitig eine ausreichende Stabilisierung des Schaumglasbandes gewährleistet ist. Insbesondere kann die Maschenweite des Drahtgliederbandes über der Länge der Kühlstrecke variieren, da in kälteren Bereichen bereits eine ausreichende Erstarrung des Schaumglasbandes stattgefunden hat.

Die Heiz- und/oder Kühlmittel können von unterschiedlichster Art sein, nämlich Gasbrenner, Elektroheizungen bzw. Kühlschlangen, Gebläse u. dgl. umfassen. Vorzugsweise sind sowohl in dem Schaumofen als auch im Abkühlofen entsprechende Mess- und Sensoreinrichtungen vorgesehen, die eine genaue Temperaturüberwachung ermöglichen. Ferner ist vorzugsweise eine entsprechende Steuerung vorgesehen, die die Heiz- und/oder Kühlmittel in Abhängigkeit von den ermittelten Temperaturen steuert bzw. regelt um ein genau definiertes Abkühl- bzw. Heizprofil einzustellen.

Vorzugsweise sind die Heiz- und/oder Kühlmittel in dem Abkühlofen sowohl oberhalb als auch unterhalb des Förderbandes bzw. der Förderstrecke und auch seitlich davon angeordnet, um unerwünschte Temperaturunterschiede über dem Querschnitt des Schaumglasstranges zu vermeiden, was zu unterwünschten Spannungen und zu einer Zerstörung des Schaumglasstranges führen könnte. Die Förderstrecke bzw. das Förderband muss ähnlich wie in dem Aufschäumofen aus einem entsprechenden temperaturbeständigen Material gefertigt sein.

Die Wärmekapazität des Materials, aus dem die Förderstrecke gebildet ist, sollte kleiner sein als diejenige, die der Schaumglasstrang aufgrund seiner Schichtdicke aufweist. Vorzugsweise handelt es sich bei dem Förderband bzw. Fördermittel um hitzebeständige Materialien.

Vorzugsweise wird bei dem erfindungsgemäßen Verfahren für das Glasmehl im wesentlichen 100 % unbelastetes Altglas verwendet, welches noch vor dem Vermischen mit dem Blähmittel und dem Zuführen zu dem Aufschäumofen vermahlen wird.

Die Schaumglasplatten, die nach dem oben beschriebenen Verfahren hergestellt werden, bestehen aus Glaspartikeln, die während des Aufschäumprozesses sich unter Bildung einer Vielzahl von insbesondere gleichmäßigen Poren in Art eines Sinterprozesses miteinander verbinden. Außer den in dem Blähmittel enthaltenen Stoffen sind jedoch keine zusätzlichen Bindemittel erforderlich. Insbesondere wird kein Schaumglasgranulat durch einen zusätzlich zu dem Schaumprozess vorgesehenen Bindeprozess mittels organischen oder anorganischen Bindemitteln zu einem Formteil verbunden, wie dies im Stand der Technik bekannt ist. Insofern zeichnet sich die vorliegende Erfindung dadurch aus, dass einstückige Platten oder allgemein Formteile in einem kontinuierlichen Prozess im unmittelbaren Anschluss an das Aufschäumen des Glases also der eigentlichen Herstellung des Schaumglases erzeugt werden.

### Kurze Beschreibung von Zeichnungen

Weitere Vorteile, Merkmale und Kennzeichen der vorliegenden Erfindung werden bei der nachfolgenden detaillierten Beschreibung von Ausführungsbeispielen anhand der beigefügten Zeichnung deutlich. Die Zeichnungen zeigen hierin in rein schematischer Weise in
Fig. 1 eine seitliche Schnittansicht einer Ausführungsform einer entsprechenden Vorrichtung zur kontinuierlichen Herstellung von einstückigen Schaumglasplatten.
Fig. 2 eine perspektivische Darstellung eines Segments des Abkühlofens bzw. der Kühlstrecke aus Fig. 1;
Fig. 3 eine perspektivische Darstellung des Segments aus Fig. 2 in offener Darstellung;
Fig. 4 einen Querschnitt des Segments aus den Fig. 2 und 3; und in
Fig. 5 einen Längsschnitt durch das Segment aus den Fig. 2 bis 4.

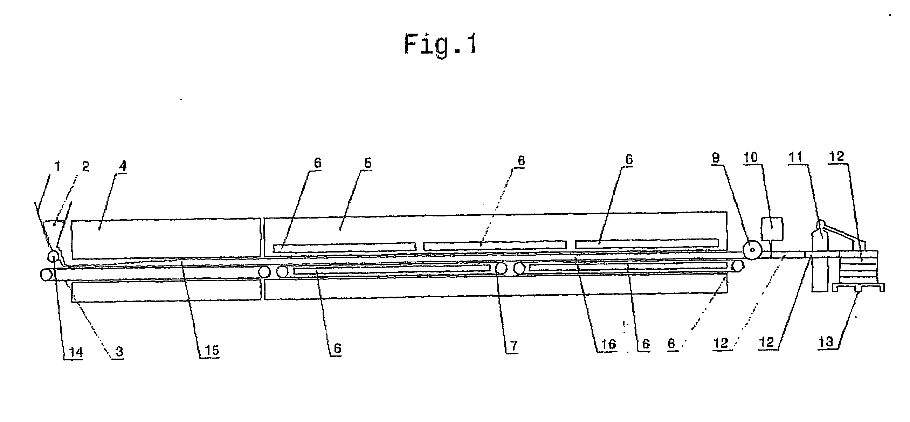

In der Fig. 1 ist in der linken Bildhälfte eine trichterförmige Aufgabevorrichtung 1 dargestellt, mit der das Gemisch 2 aus Blähmittel und Glasmehl über eine Aufgaberolle 14 auf eine Endlos-Transportfördereinrichtung 3 in gleichmäßiger Weise aufgegeben werden kann. Damit entsteht eine Schüttung 15 auf dem Endlos-Förderband 3, welche durch das Endlos-Förderband 3 durch den Aufschäumofen 4 in einer definierten Geschwindigkeit bewegt wird.

In dem Aufschäumofen 4 sind nicht dargestellte Heizeinrichtungen vorgesehen, die das Gemisch 2 bzw. die Schüttung 15 auf eine entsprechende Temperatur von ca. 600 °C bis 950 °C, insbesondere um 800 °C bis 850 °C bringen. Dadurch kommt der Aufschäumprozess in Gang und es entsteht ein kontinuierlicher Schaumglasstrang 16, der dann in unmittelbarem Anschluss in einer kontinuierlichen Weise in den Abkühlofen 5 überführt wird.

Im Abkühlofen 5 sind entsprechende Fördereinrichtungen 7 und 8 vorgesehen, auf denen der Schaumglas-Strang 16 weiterbefördert wird. Selbstverständlich können mehrere Abkühlöfen bzw. Segmente mit mehreren Transportfördereinrichtungen hintereinander geschaltet oder ein einziger Abkühlofen mit einem oder mehreren Segmenten mit einer einzigen Transportfördereinrichtung vorgesehen sein.

Im Abkühlofen 5 sind wiederum Heizeinrichtungen und/oder Kühlanlagen 6 vorgesehen, die sowohl oberhalb als auch unterhalb des Schaumglas-Strangs 16 vorgesehen sein können. Zudem können auch seitlich des Schaumglasstranges (nicht gezeigt) Heiz- und/oder Kühleinrichtungen vorgesehen sein, wobei sämtliche geeignete Heizeinrichtungen und/oder Kühlanlagen, wie Gasbrenner, Elektroheizungen bzw. Gebläse u. dgl. vorgesehen sein können.

Durch das gleichmäßige und langsame sowie definierte Abkühlen des Schaumglas-Strangs 16 im Abkühlofen 5 werden innere Spannungen durch das Abkühlen vermieden und es entsteht eine durchgehende, lange Schaumglasplatte, die eine Breite entsprechend der Fördereinrichtung 3 bzw. Fördereinrichtungen 7 und 8 aufweist, welche im Bereich zwischen 1 und 2 m, vorzugsweise 1,40 m bis 1,60 m sein können. Aber auch größere Breiten sind bis 4 m vorstellbar.

Am Ende des Abkühlofens 5, wenn der Schaumglas-Strang 16 auf annähernd Raumtemperatur abgekühlt ist, sind Schneideinrichtungen 9 und 10 vorgesehen, um den Schaumglas-Strang 16 in einzelne Platten 12 zu teilen. Hierbei können Schneideinrichtungen 9 vorgesehen sein, die den Schaumglasstrang in Längsrichtung schneiden, sowie eine Schneideinrichtung 10, die die Platten in Querrichtung abschneidet. Die Schneideinrichtungen 9, 10 sind vorzugsweise durch Diamantschneidwerkzeuge oder Bandsägen gebildet. Nach der Schneideinrichtung kann am Ende der Vorrichtung eine automatische Hebeanlage 11 vorgesehen sein, die die geschnittenen Platten 12 auf eine Transporteinheit 13, wie beispielsweise eine Palette stapelt.

Die Transportfördereinrichtungen 3, 7 und 8 müssen aus einem hitzebeständigen Material gefertigt sein, welches die Temperaturen, die bei dem Aufschäumprozess in der Größenordnung von 600 °C bis 950 °C, insbesondere im Bereich von ca. 800 °C auftreten, ohne Schaden überstehen können. Ferner sollte die Wärmekapazität der Transportfördereinrichtung so ausgelegt sein, dass pro Flächeneinheit die Wärmekapazität des Glas-Stranges größer ist als die der Transportfördereinrichtung. Damit ist eine entsprechende Temperaturführung gewährleistet. Vorzugsweise können in den Transportfördereinrichtungen entsprechende Kühlmittel, wie Kühlschlangen vorgesehen sein. Der Schaumglas-Strang weist üblicherweise am Ende eine Dicke von ca. 50 mm bis 150 mm, vorzugsweise 80 mm bis 120 mm auf, wobei die Schüttung 15 mit einer Schichtdicke von 0,5 cm bis 5 cm aufgetragen wird. Der Schaumglas-Strang kann am Ende der Vorrichtung auch bezüglich der Dicke noch zusätzlich geschnitten werden (nicht gezeigt).

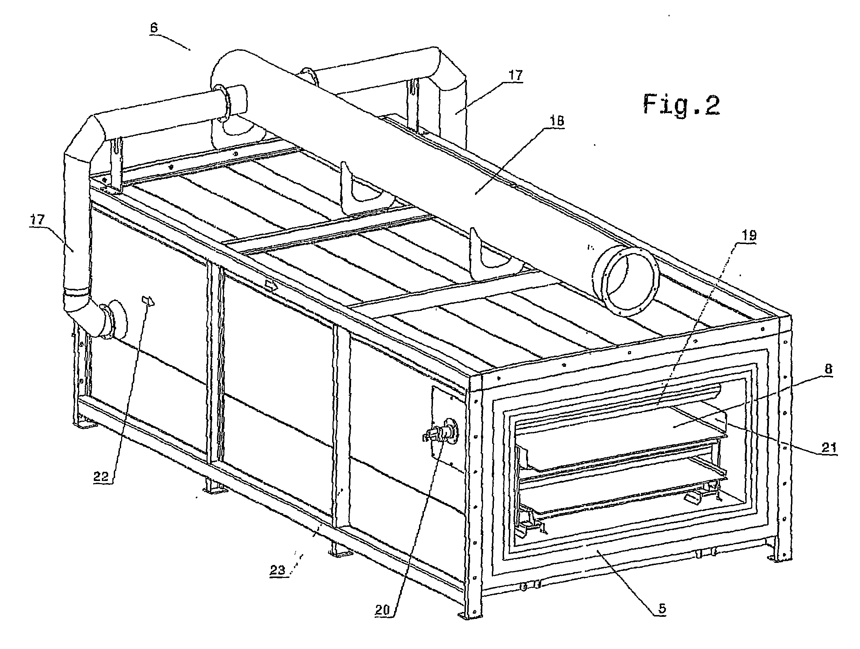

In Fig. 2 ist in detaillierter Darstellung ein Segment der Kühlstrecke 5 aus Fig. 1 gezeigt.

Das Segment ist von quaderförmiger Grundstruktur, wobei diese als Gehäuse durch entsprechende Stützen und Streben 23 mit entsprechender Beplankung aufgebaut ist. Im Innenraum der Kühlstrecke 5 bzw. des entsprechenden Segments ist eine EndlosFördereinrichtung 8 in Form eines Drahtgliederbandes dargestellt, welches seitliche Führungselemente 21 aufweist, um den Schaumglasstrang (nicht gezeigt) aufzunehmen und durch die Kühlstrecke 5 zu bewegen. Durch die endlose Ausführung der Transportfördereinrichtung, bei der das Drahtgliederband im Kreis bewegt wird, ist in dem Gehäuse der Kühlstrecke sowohl das Oberteil als auch das Unterteil der Fördereinrichtung zu erkennen.

Um eine erfindungsgemäße Kühlung in der Kühlstrecke 5 zu gewährleisten, sind bei dem gezeigten Ausführungsbeispiel entsprechend der mit den Pfeilen 22 angezeigten Transportrichtung am Ausgang des Segments zwei Luftverteiler bzw.

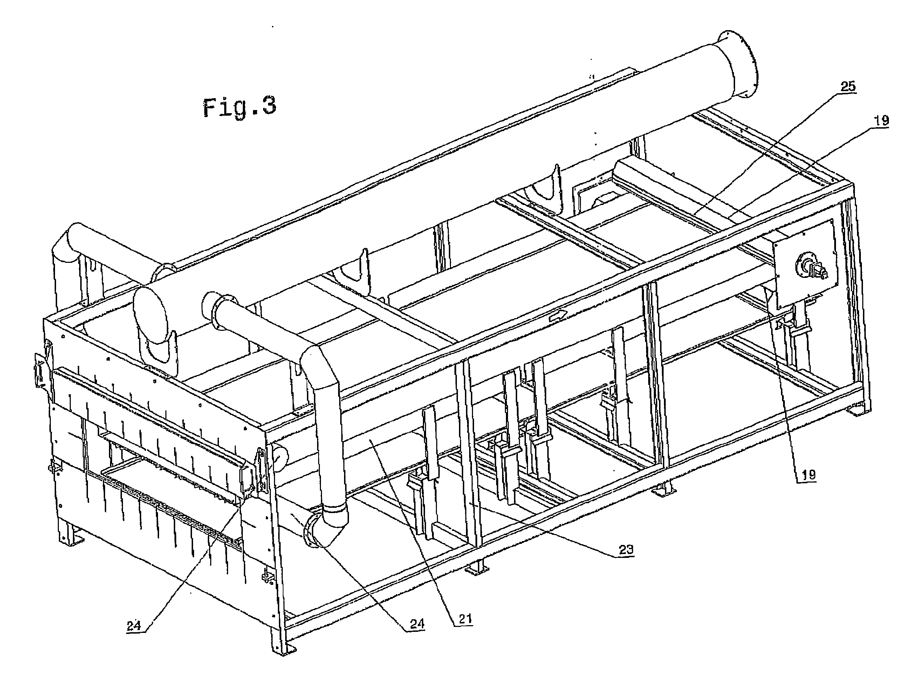

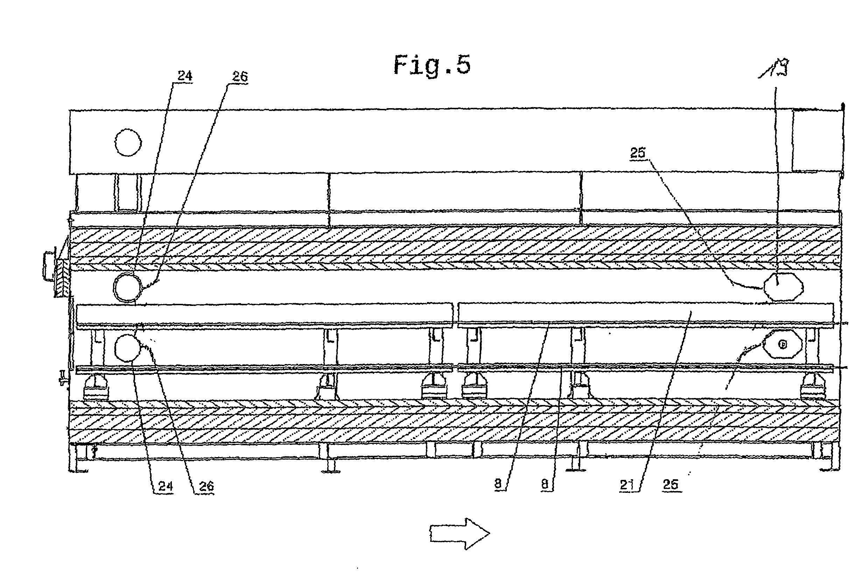

Fluidverteiler 19 vorgesehen, in die entsprechend temperierte Luft (Fluid) eingeblasen werden, um in Kontakt mit dem Schaumglasstrang, der abgekühlt werden soll, zu gelangen. An der in Bezug auf die Transportrichtung Eingangsseite des Segments sind, wie sich insbesondere aus den Fig. 3 und 5 ergibt, entsprechende Absaugvorrichtungen 24 vorgesehen, die an Fluidleitungen 17, 18 angeschlossen sind, um das eingeblasene Heiz- bzw. Kühlmedium abzuleiten. Je nach dem wo das Segment in der Kühlstrecke angeordnet ist, wird das Fluid bzw. Medium, insbesondere die am häufigsten zu verwendende Luft, auf eine entsprechende Temperatur aufgeheizt oder am Ende der Kühlstrecke auch abgekühlt, um dann in den Abkühlofen bzw. die Kühlstrecke 5 eingeblasen zu werden.

Entsprechend können am Eingang 20 zu den Fluidverteilern 19 entsprechende Kühl- oder Heizelemente, wie z. B. Gasbrenner, Ölbrenner, Elektroheizungen o. dgl. vorgesehen sein, um das Fluid (Medium) auf die entsprechende Temperatur zu bringen. Selbstverständlich können am Eingang 20 Fluidleitungen vorgesehen sein, die aber der Einfachheit halber in den Figuren weggelassen worden sind.

Insbesondere ist es vorteilhaft, wenn das Fluid, das von den Absaugvorrichtungen 24 aus dem Abkühlofen 5 entfernt wird an anderer geeigneter Stelle in den Kühlofen wieder zugegeben wird. Beispielsweise kann die kalte Umgebungsluft, die am Ende der Kühlstrecke eingeblasen wird, zur weiteren Kühlung in den wärmeren Bereichen eingesetzt werden, da diese Luft sich bereits durch den Wärmeübergang vom Schaumglas in die Luft aufgeheizt hat.

Selbstverständlich sind zum Transport des Fluids (Luft) entsprechende Pumpen oder Gebläse vorgesehen, die jedoch in den Zeichnungen nicht dargestellt sind.

Bei dem gezeigten Ausführungsbeispiel sind, wie insbesondere in den Fig. 3 und 5 zu erkennen ist, die Fluidverteiler 19 und Absaugvorrichtungen 24 oberhalb und unterhalb des Schaumglasstrangs entlang der Transportrichtung gegenüberliegend angeordnet, so dass sich eine Längskonvektion, also ein Fluidstrom entgegengesetzt parallel zur Schaumglastransportrichtung einstellt. Durch diese Längskonvektion kann in einfacher Weise die für die Schaumglasabkühlung erforderliche Temperaturkonstanz im Schaumglasstrang über die Breite und Dicke des Schaumglases bei gleichzeitigem Temperaturgradienten entlang der Längsrichtung gewährleistet werden.

Wie sich ebenfalls aus den Fig. 3 und 5 deutlich ergibt, sind die Fluidverteiler 19 und Absaugvorrichtungen 24 unterschiedlich mit einem runden und achteckigen Querschnitt ausgebildet. Sie können jedoch auch identisch ausgebildet sein, so dass sowohl eine Strömungsrichtung entgegengesetzt zur Schaumglastransportrichtung als auch entlang der Schaumglastransportrichtung eingestellt werden kann, indem lediglich einfach die Funktionsweise von Fluidverteiler und Absaugvorrichtung durch Umschalten der Gebläse- oder Pumpeinrichtungen geändert wird.

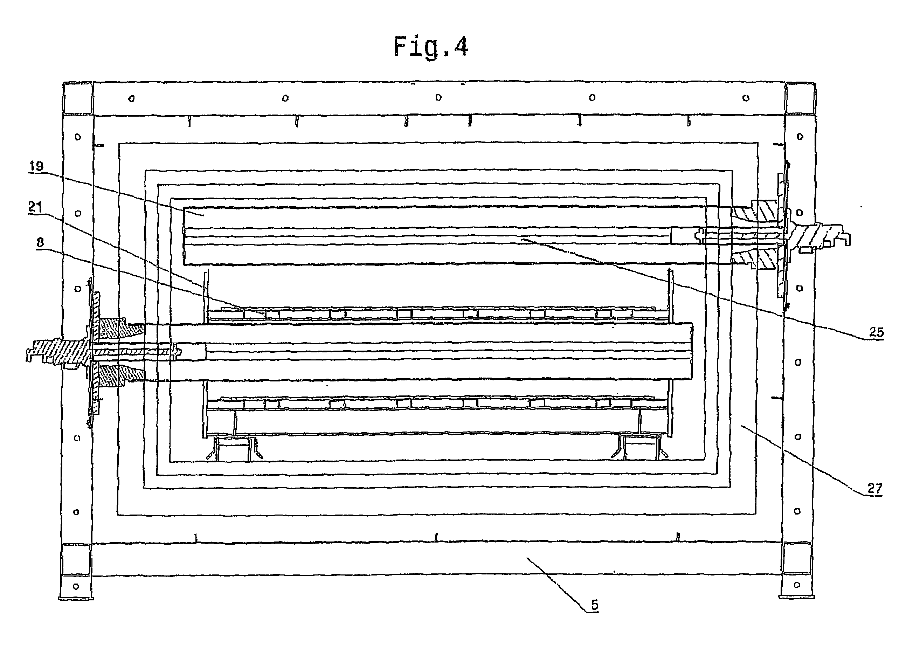

Wie in den Fig. 4 und 5 deutlich wird, sind die Absaugvorrichtungen und Fluidverteiler 19 als quer über den Schaumglasstrang angeordnete Sammelrohre mit beliebiger Querschnittsform ausgebildet, welche an einer Seite oder an gegenüberliegenden Seiten bzw. umlaufend Öffnungen 26 bzw. Düsen 25 aufweisen, um das in das Sammelrohr eingeblasene bzw. eingepumpte Fluid abzugeben oder in das Sammelrohr einzusaugen und von dort abzuführen.

Durch das Einblasen bzw. Einpumpen des Fluids quer zur Schaumglastransportrichtung und Abgabe des Fluids in oder entgegengesetzt zur Schaumglastransportrichtung wird beim Austritt des Fluids durch die Düsen 25 eine Verwirbelung erzielt, die eine hochturbulente Strömung des Fluids zu den Absaugvorrichtungen 24 zur Folge hat. Aufgrund dieser hochturbulenten Strömung wird ein besonders guter Wärmeübergang vom Schaumglas zum Fluid erreicht, da durch die Verwirbelung immer ausreichend Fluid mit Kapazität zur Aufnahme von Wärme in Kontakt mit dem Schaumglas kommt. Entsprechend ist es vorteilhaft im Bereich zwischen den Fluidverteilern und den Absaugvorrichtungen sog. Turbulenzelemente vorzusehen, die verhindern, dass sich eine laminare Strömung ausbildet. Derartige Turbulenzelemente sind in den Figuren jedoch nicht dargestellt.

Vorzugsweise trägt auch die Transportförderanlage zur Verwirblung des Fluids mit bei, insbesondere wenn sie als Drahtgliederband ausgebildet ist, da durch die Drahtglieder eine rauhe Oberfläche gegeben ist, die beim Entlangströmen des Fluids zu einer Verwirbelung führt.

Aus den Fig. 4 und 5 ist auch ersichtlich, dass die Fluidverteiler 19, wie in Fig. 4 dargestellt bzw. auch die Absaugvorrichtungen 24 oberhalb und unterhalb des Schaumglasstranges angeordnet sind, wobei insbesondere die Fluidverteiler 19 bzw. Absaugvorrichtungen 24 zwischen dem Obertrum und dem Untertrum der Transportfördereinrichtung vorgesehen sind.

Die Düsen 25 bzw. Öffnungen 26 der Sammlerrohre der Fluidverteiler 19 bzw. Absaugvorrichtungen 24 sind so gestaltet, dass ihr Öffnungsquerschnitt veränderbar ist und zwar unabhängig für jede einzelne Düse entlang der Längsrichtung des Sammelrohres. Auf diese Weise ist es möglich über den Querschnitt unterschiedliche Strömungsverhältnisse oder diagonale Strömungsverhältnisse einzustellen, wenn beispielsweise die Düsen 25 bzw. Öffnungen 26 der gegenüberliegenden Fluidverteiler 19 und Absaugvorrichtungen 24 entsprechend geschlossen oder geöffnet sind. Eine über dem Querschnitt des Schaumglasstrangs unterschiedliche Strömungsverteilung kann insbesondere in der Weise sinnvoll sein, dass die Strömung in der Mitte besonders stark, also ein besonders hoher Volumenstrom des Fluids eingestellt ist, während an den Rändern, die von Hause aus schneller abkühlen, ein geringerer Fluidstrom eingestellt wird.

## Patentansprüche

1. Verfahren zur kontinuierlichen Herstellung von einstückigen Schaumglasplatten, bei welchem das Schaumglas aus Glaspartikeln und einem Blähmittel unter Einwirkung einer Temperaturbehandlung in einem Durchlaufofen zu einem endlosen Schaumglasstrang (16) aufgeschäumt wird, und wobei unmittelbar nach dem Aufschäumen der Schaumglasstrang kontinuierlich und in einer Geschwindigkeit in einem Abkühlofen auf Raumtemperatur abgekühlt wird, dass das Schaumglas mit seiner Struktur aus Glas und einer Vielzahl von Poren im Wesentlichen spannungsfrei ist,
**dadurch gekennzeichnet, dass**
der Schaumglasstrang entlang der Transportrichtung mit einer ersten Kühlgeschwindigkeit von der Schäumtemperatur auf eine obere Entspannungstemperatur und von der oberen Entspannungstemperatur in einer zweiten Kühlgeschwindigkeit auf die untere Entspannungstemperatur und von der unteren Entspannungstemperatur in einer dritten Kühlgeschwindigkeit auf annähernd Raumtemperatur abgekühlt wird, wobei beim Abkühlen im Schaumglasstrang (16) lediglich ein Temperaturgradient in Längs- oder Transportrichtung eingestellt wird, die Temperatur jedoch über die Breite und Dicke des Schaumglasstranges konstant gehalten wird, und wobei der Schaumglasstrang (16) während der Abkühlung einem entsprechend temperierten Kühlmedium ausgesetzt wird, welches in einer hochturbulenten Strömung an der Oberfläche des Schaumglasstranges und/oder entsprechenden Transportorganen vorbeiströmt.

2. Verfahren nach Anspruch 1,
**dadurch gekennzeichnet, dass**
die im Schaumglasstrang (16) verbleibenden Eigenspannungen so gering sind, dass eine Rissausbildung oder -ausbreitung in der Schaumglasstruktur, die eine Unversehrtheit der strukturellen Einheit des Schaumglasstranges beeinträchtigen würden, ausgeschlossen sind.

3. Verfahren nach Anspruch 1 oder 2,
**dadurch gekennzeichnet, dass**
der Schaumglasstrang (16) nach dem Abkühlen in einzelne Platten (12) geschnitten wird.

4. Verfahren nach einem der vorhergehenden Ansprüche,
**dadurch gekennzeichnet, dass**
die zweite Abkühlgeschwindigkeit kleiner ist als die erste und dritte Abkühlgeschwindigkeit.

5. Verfahren nach einem der vorhergehenden Ansprüche
**dadurch gekennzeichnet, dass**
bei der Schäumtemperatur das Glas eine Viskosität im Bereich von η = i0⁷ bis 10 ⁸dPa s, insbesondere η = 10^{7,6} dPa s, bei der oberen Entspannungstemperatur eine Viskosität im Bereich von η = 10^{12,5} bis 10^{13,5} dPa s, insbesondere η = 10¹³ dPa s und bei der unteren Entspannungstemperatur eine Viskosität im Bereich von η = 10¹⁴ bis 10¹⁵ dPa s, insbesondere η = 10^{14,5} dPa s aufweist.

6. Verfahren nach einem der vorhergehenden Ansprüche,
**dadurch gekennzeichnet, dass**
die Abkühlgeschwindigkeiten, insbesondere die zweite Abkühlgeschwindigkeit su gewählt wird, dass ein Temperaturausgleich zwischen der in den Poren eingeschlossenen Luft und dem umgebenden Glas gewährleistet ist.

7. Verfahren nach Anspruch 1,
**dadurch gekennzeichnet, dass**
die Strömung im wesentlichen parallel, entgegengesetzt parallel oder in einem spitzen Winkel, insbesondere diagonal zur Transportrichtung an der Ober- und/oder Unterseite und/oder seitlich des Schaumglasstranges erfolgt.

8. Vorrichtung zur Herstellung von einstückigen Schaumglasplatten mit einem Aufschäumofen (4), in dem ein kontinuierlicher Schaumglasstrang (16) erzeugt wird, wobei unmittelbar anschließend an den Aufschäumofen eine Kühlstrecke (5) vorgesehen ist, durch die der Schaumglasstrang (16) mittels einer Förderanlage (R) hindurch bewegt wird und durch entlang der Kühlstrecke (5) vorgesehene Heiz- und/oder Kühlmittel (6) definiert abgekühlt wird,
**dadurch gekennzeichnet, dass**
die Heiz- und/oder Kühlmittel der Kühlstrecke derart ausgebildet sind, dass die Kühlstrecke (5) in verschiedene Zonen mit unterschiedlichen Abkühlgeschwindigkeiten unterteilt ist und dass beim Abkühlen im Schaumglasstrang (16) lediglich ein Temperaturgradient in Längs- oder Transportrichtung eingestellt wird, die Temperatur jedoch über die Breite und Dicke des Schaumglasstrangs konstant gehalten wird, wobei eine Fluidströmung erzeugt wird, mit der ein Fluid zum Temperaturausgleich in Kontakt mit dem Schaumglasstrang gebracht wird, wobei der Fluidstrom durch Prall- und Turbulenzelemente, die seitlich, oberhalb und/oder unterhalb der Schaumglastransportstrecke angeordnet sind, und durch eine konturierte Ausbildung der Schaumglastransportstrecke verwirbelt wird, so dass eine hoch turbulente Strömung eingestellt wird.

9. Vorrichtung nach Anspruch 8,
**dadurch gekennzeichnet, dass**
die Kühlstrecke (5) modular aufgebaut und in eine Vielzahl von vom Grundaufbau identisch ausgebildeten Segmenten unterteilt ist.

10. Vorrichtung nach einem der Ansprüche 8 oder 9,
**dadurch gekennzeichnet, dass**
die Heizmittel (6) direkt oder indirekt heizende Heizelemente, Gas- oder Ölbrenner, Elektroheizungen, Strahlungsheizungen und/oder damit erhitzte Strömungsmedien umfassen.

11. Vorrichtung nach einem der Ansprüche 8 bis 10,
**dadurch gekennzeichnet, dass**
die Kühlmittel (6) unbeeinflusste, gekühlte und/oder vorgewärmte Strömungsmedien umfassen.

12. Vorrichtung nach einem der Anspruche 8 bis 11,
**dadurch gekennzeichnet, dass**
die Heiz- und/oder Kühlmittel (6) ober- und/oder unterhalb und/oder seitlich der Transporteinrichtung (8) des Schaumglasstranges (16) angeordnet sind.

13. Vorrichtung nach einem der Ansprüche 8 bis 12,
**dadurch gekennzeichnet, dass**
die Heiz- und/oder Kühlmittel (6) stufenlos regulierbar sind.

14. Vorrichtung nach einem der Ansprüche 8 bis 13,
**dadurch gekennzeichnet, dass**
die Heiz- und/oder Kühlmittel Fluidleitungen (17, 18) zur Durchleitung von Fluid umfassen, welche in Fluidverteiler (19) münden, die an der Schaumglastransportstrecke angeordnet sind und das Fluid zum Temperaturausgleich in Kontakt mit dem Schaumglasstrang bringen.

15. Vorrichtung nach Anspruch 14,
**dadurch gekennzeichnet, dass**
die Heiz- und/oder Kühlelemente in der Fluidleitung (17, 18) insbesondere unmittelbar am Eintritt (20) in die Kühlstrecke angeordnet sind.

16. Vorrichtung nach einem der Ansprüche 14 oder 15,
**dadurch gekennzeichnet, dass**
ferner Absaugvorrichtungen (24) vorgesehen sind, an die Fluidleitungen (17, 18) angeschlossen sind, wobei das abgesaugte Fluid an anderer Stelle der Kühlstrecke wieder zugeführt wird.

17. Vorrichtung nach einem der Ansprüche 14 bis 16,
**dadurch gekennzeichnet, dass**
die Fluidverteiler (19) und/oder Absaugvorrichtungen (24) Sammelrohre umfassen, die einstellbare Düsen (25) oder Öffnungen (26) aufweisen und quer zur Schaumglastransportrichtung angeordnet sind.

18. Vorrichtung nach einem der Ansprüche 14 bis 17,
**dadurch gekennzeichnet, dass**
jede Zone und/oder jedes Segment für sich einzeln zusammenwirkende Fluidverteiler (19) und Absaugvorrichtungen (24) aufweist, so dass die Temperaturregelung für jede Zone und/oder jedes Segment unabhängig ausgestaltet ist.

19. Vorrichtung nach einem der Ansprüche 14 bis 18,
**dadurch gekennzeichnet, dass**
jeweils ein Fluidverteiler (19) und eine Absaugvorrichtung (24) in Schaumglastransportrichtung gegenüberliegend angeordnet sind, so dass eine Strömung des Fluids parallel oder im spitzen Winkel, oder diagonal oder entgegengesetzt parallel zur Schaumglastransportrichtung einstellbar ist.

20. Vorrichtung nach einem der Ansprüche 14 bis 19,
**dadurch gekennzeichnet, dass**
Fluidverteiler (19) und Absaugvorrichtung (24) so einstellbar sind, dass der Fluidstrom in der Mitte des Schaumglasstrangs größer als an den Rändern ist.

21. Vorrichtung nach einem der Ansprüche 14 bis 20,
**dadurch gekennzeichnet, dass**
die Fluidverteiler (19) mit ihren Düsen *(25)* oder Öffnungen (26) so gestaltet sind, dass beim Austritt des Fluids eine Verwirbelung entsteht.

22. Vorrichtung nach einem der Ansprüche 8 bis 21,
**dadurch gekennzeichnet, dass**
jede Zone und/oder jedes Segment eine eigene Schaumglastransporteinrichtung (8) aufweist

23. Vorrichtung nach einem der Ansprüche 8 bis 22,
**dadurch gekennzeichnet, dass**
die Schaumglastransportstrecke (8) aus einem Drahtgliederband mit einer so großen Maschenweite gebildet ist, dass die Wärmekapazität bei ausreichender Stützung des Schaumglasstranges minimiert wird.

## Claims

1. Method for the continuous production of one-piece foamed glass sheets, whereby the foamed glass is foamed from glass particles and a blowing agent with a thermal treatment in a conveyor furnace to give an endless foamed-glass web (16) and, directly after foaming, the foamed-glass web is continuously cooled to room temperature in a cooling furnace at such a rate that the foamed glass has an essentially stress-free structure made up of glass and a plurality of pores,
**characterised by** the fact that
the foamed-glass web is cooled along the transport direction from the foaming temperature to an upper relaxation temperature at a first cooling rate and from the upper relaxation temperature to the lower relaxation temperature at a second cooling rate and from the lower relaxation temperature to nearly room temperature at a third cooling rate, wherein, during cooling in the foamed-glass web (16), one temperature gradient only is set in the longitudinal or conveying direction and is kept constant across the width and thickness of the foamed-glass web, and wherein the foamed-glass web (16) is exposed during cooling to a corresponding heat-controlled cooling medium, which, under highly turbulent flow, flows past the surface of the foamed-glass web and/or corresponding transport devices.

2. Method in accordance with claim 1,
**characterised by** the fact that
residual inherent stresses in the foamed-glass web (16) are so low that crack formation or propagation in the foamed glass structure which would affect the integrity of the structural unit of the foamed-glass web is ruled out.

3. Method in accordance with claims 1 or 2,
**characterised by** the fact that
the foamed-glass web (16) is cut into individual sheets (12) after cooling.

4. Method in accordance with any of the previous claims,
**characterised by** the fact that
the second cooling rate is lower than the first and third cooling rates.

5. Method in accordance with any of the previous claims,
**characterised by** the fact that
at the foaming temperature, the glass has a viscosity in the range of η = 10⁷ to 10⁸ dPa s, in particular η = 10^{7.6} dPa s, at the upper relaxation temperature a viscosity in the range of η = 10^{12.5} to 10^{13.5} dPa s, in particular η = 10¹³ dPa s, and at the lower relaxation temperature, a viscosity in the range of η = 10¹⁴ to 10¹⁵ dPa s, in particular η = 10^{14.5} dPa s.

6. Method in accordance with any of the previous claims,
**characterised by** the fact that
the cooling rates, particularly the second cooling rate, are chosen such that a temperature equalisation is ensured between the air enclosed in the pores and the surrounding glass.

7. Method in accordance with claim 1,
**characterised by** the fact that
the flow occurs on the upper and/or bottom and/or lower side and/or along the side of the foamed-glass web, essentially parallel with, counter-parallel with or at an acute angle to, especially diagonally to the transport direction.

8. Apparatus for the production of one-piece foamed glass sheets with a foaming oven (4), in which a continuous foamed-glass web (16) is generated, wherein the foaming oven is immediately followed by a cooling run (5), through which the foamed-glass web (16) is moved by means of a conveyor system (R) and is cooled in a defined manner by heating and/or cooling means (6) provided along the cooling run (5),
**characterised by** the fact that
the heating and/or cooling means in the cooling run are configured such that the cooling run (5) is subdivided into different zones of different cooling rates and that, during cooling, a temperature gradient in the foamed-glass web (16) is set only in the longitudinal or transport direction, while the temperature across the width and thickness of the foamed-glass web is held constant, wherein fluid flow is generated with which a fluid for temperature equalisation is brought into contact with the foamed-glass web, wherein the fluid flow is swirled by impact and turbulence elements which are arranged at the sides, above and/or below the foamed-glass transport section and by a contoured design of the foamed-glass transport section, such that highly turbulent flow is generated.

9. Apparatus in accordance with claim 8,
**characterised by** the fact that
the cooling run (5) is modular and subdivided into a number of segments of identical basic structure.

10. Apparatus in accordance with any of claims 8 or 9,
**characterised by** the fact that
the heating means (6) comprise direct or indirect heater elements, gas or oil burners, electric heaters, radiant heaters and/or flow media heated therewith.

11. Apparatus in accordance with any of claims 8 to 10,
**characterised by** the fact that
the cooling means (6) comprise uninfluenced, chilled and/or pre-heated flow media.

12. Apparatus in accordance with any of claims 8 to 11,
**characterised by** the fact that
the heating and/or cooling means (6) are arranged above and/or below and/or at the sides of the transport device (8) of the foamed-glass web (16).

13. Apparatus in accordance with any of claims 8 to 12,
**characterised by** the fact that
the heating and/or cooling means (6) are continuously adjustable.

14. Apparatus in accordance with any of claims 8 to 13,
**characterised by** the fact that
the heating and/or cooling means comprise fluid lines (17, 18) for allowing passage of fluid, which open into fluid distributors (19), which are arranged on the foamed-glass transport section and bring the fluid to temperature equalisation when in contact with the foamed-glass web.

15. Apparatus in accordance with claim 14,
**characterised by** the fact that
the heating and/or cooling elements in the fluid line (17, 18) are especially arranged directly at the inlet (20) into the cooling run.

16. Apparatus in accordance with any of claims 14 or 15,
**characterised by** the fact that
furthermore, extraction apparatuses (24) are provided which are connected to the fluid lines (17, 18), wherein the extracted fluid is then fed into the cooling run again at another point.

17. Apparatus in accordance with any of claims 14 to 16,
**characterised by** the fact that
the fluid distributors (19) and/or extraction apparatuses (24) comprise collector pipes which have adjustable nozzles (25) or openings (26) and are arranged transversely to the foamed-glass transport direction.

18. Apparatus in accordance with any of claims 14 to 17,
**characterised by** the fact that
each zone and/or each segment has its own individually interacting fluid distributors (19) and extraction apparatuses (24), such that the temperature control is configured independently for each zone and/or each segment.

19. Apparatus in accordance with any of claims 14 to 18,
**characterised by** the fact that
each of one fluid distributor (19) and one extraction apparatus (24) are arranged opposite the foamed-glass transport direction, such that the fluid can be set to flow parallel with or at an acute angle to, diagonally to or counter-parallel with the foamed-glass transport direction.

20. Apparatus in accordance with any of claims 14 to 19,
**characterised by** the fact that
fluid distributors (19) and extraction apparatus (24) can be set such that the fluid flow is greater in the middle of the foamed-glass web than at the edges.

21. Apparatus in accordance with any of claims 14 to 20,
**characterised by** the fact that
the fluid distributors (19) with their nozzles (25) or openings (26) are designed such that turbulence is created upon exit of the fluid.

22. Apparatus in accordance with any of claims 8 to 21,
**characterised by** the fact that
each zone and/or each segment has its own foamed-glass transport device (8).

23. Apparatus in accordance with any of claims 8 to 22,
**characterised by** the fact that
the foamed-glass transport section (8) is formed from a wire-link belt of such large mesh that the heat capacity is minimised while adequate support is provided for the foamed-glass web.

## Revendications

1. Procédé de fabrication en continu de plaques de verre mousse en un seul morceau dans lequel le verre mousse composé de particules de verre et d'un agent de gonflement est moussé dans un four traversant sous l'effet d'un traitement thermique jusqu'à obtention d'un cordon de verre mousse (16) sans fin ; et
le cordon de verre mousse étant refroidi en continu et à une certaine vitesse directement après le moussage en passant dans un four de refroidissement jusqu'à atteindre la température ambiante, de façon à ce que le verre mousse ne présente pour l'essentiel pas de contraintes au niveau de sa structure en verre et de la pluralité de pores ;
**caractérisé en ce que** :
le cordon de verre mousse est refroidi le long de la direction de transport en passant, à une première vitesse de refroidissement, de la température de moussage à une température de détente supérieure et, à une deuxième vitesse de refroidissement, de la température de détente supérieure à la température de détente inférieure et, à une troisième vitesse de refroidissement, de la température de détente inférieure à approximativement la température ambiante, seul un gradient de température étant réglé dans la direction longitudinale ou de transport lors du refroidissement dans le cordon de verre mousse (16), la température étant quant à elle maintenue constante sur toute la largeur et l'épaisseur du cordon de verre mousse et le cordon de verre mousse (16) étant exposé à un agent de refroidissement tempéré de façon correspondante pendant le refroidissement, ledit agent circulant dans un flux à forte turbulence contre la surface du cordon de verre mousse et/ou des organes de transport correspondants.

2. Procédé selon la revendication 1, **caractérisé en ce que** les contraintes propres restant dans le cordon de verre mousse (16) sont si limitées que la formation ou la propagation de fissures dans la structure de verre mousse, qui endommageraient l'unité structurelle du cordon de verre mousse, sont exclues.

3. Procédé selon la revendication 1 ou 2, **caractérisé en ce que** le cordon de verre mousse (16) est coupé en plaques (12) individuelles après le refroidissement.

4. Procédé selon l'une quelconque des revendications précédentes, **caractérisé en ce que** la deuxième vitesse de refroidissement est inférieure à la première et à la troisième vitesse de refroidissement.

5. Procédé selon l'une quelconque des revendications précédentes, **caractérisé en ce qu'**à la température de moussage, le verre présente une viscosité comprise dans la plage de η = 10⁷ à 10⁸ dPa s, notamment de η = 10^{7,6} dPa s, qu'il présente une viscosité comprise dans la plage de η = 10^{12,5} à 10^{13,5} dPa s, notamment de η = 10¹³ dPa s, à la température de détente supérieure et une viscosité comprise dans la plage de η = 10¹⁴ à 10¹⁵ dPa s, notamment de η = 10^{14,5} dPa s, à la température de détente inférieure.

6. Procédé selon l'une quelconque des revendications précédentes, **caractérisé en ce que** les vitesses de refroidissement, notamment la deuxième vitesse de refroidissement, sont choisies de façon à garantir un équilibre de température entre l'air enfermé dans les pores et le verre alentour.

7. Procédé selon la revendication 1, **caractérisé en ce que** le flux arrive pour l'essentiel parallèlement, de façon parallèlement opposée ou à angle aigu, notamment en diagonale, par rapport à la direction de transport, au niveau du côté supérieur et/ou inférieur et/ou à côté du cordon de verre mousse.

8. Dispositif de fabrication de plaques de verre mousse en un seul morceau avec un four de moussage (4), dans lequel un cordon de verre mousse (16) continu est produit, une section de refroidissement (5) étant prévue directement après le four de moussage à travers laquelle le cordon de verre mousse (16) est déplacé à l'aide d'une installation de convoyage (R) et refroidie de façon définie par des moyens de chauffage et/ou de refroidissement (6) prévus le long de la section de refroidissement (5), **caractérisé en ce que** les moyens de chauffage et/ou de refroidissement de la section de refroidissement sont réalisés de telle sorte que la section de refroidissement (5) est divisée en différentes zones présentant différentes vitesses de refroidissement et que lors du refroidissement dans le cordon de verre mousse (16), seul un gradient de température est réglé dans la direction longitudinale ou de transport, la température étant quant à elle maintenue constante sur toute la largeur et l'épaisseur du cordon de verre mousse, un flux de fluide étant produit avec lequel un fluide est amené au contact du cordon de verre mousse pour atteindre un équilibre de température, le flux de fluide étant amené à tourbillonner au moyen d'éléments de choc et de turbulence disposés en côté, au-dessus et/ou au-dessous de la section de transport de verre mousse et par formation continue de la section de transport de verre mousse, de façon à réaliser un flux à forte turbulence.

9. Dispositif selon la revendication 8, **caractérisé en ce que** la section de refroidissement (5) est réalisée de façon modulaire et divisée en une pluralité de segments formés de façon identique à partir de la structure de base.

10. Dispositif selon l'une quelconque des revendications 8 ou 9, **caractérisé en ce que** les moyens de chauffage (6) comprennent des éléments chauffants directs ou indirects, des brûleurs à gaz ou à pétrole, des chauffages électriques, des chauffages radiants et/ou des agents de formation de flux ainsi chauffés.

11. Dispositif selon l'une quelconque des revendications 8 à 10, **caractérisé en ce que** les moyens de refroidissement (6) comprennent des agents de formation de flux laissés intacts, refroidis et/ou préchauffés.

12. Dispositif selon l'une quelconque des revendications 8 à 11, **caractérisé en ce que** les moyens de chauffage et/ou de refroidissement (6) sont disposés au-dessus et/ou en dessous et/ou à côté du dispositif de transport (8) du cordon de verre mousse (16).

13. Dispositif selon l'une quelconque des revendications 8 à 12, **caractérisé en ce que** les moyens de chauffage et/ou de refroidissement (6) peuvent être régulés en continu.

14. Dispositif selon l'une quelconque des revendications 8 à 13, **caractérisé en ce que** les moyens de chauffage et/ou de refroidissement comprennent des conduites de fluide (17, 18) pour conduire un fluide qui débouchent dans des distributeurs de fluide (19) disposés au niveau de la section de transport de verre mousse et amènent le fluide en contact avec le cordon de verre mousse pour atteindre l'équilibre de température.

15. Dispositif selon la revendication 14, **caractérisé en ce que** les éléments chauffants et/ou refroidissants sont disposés dans la conduite de fluide (17, 18), notamment directement au niveau de l'entrée (20), dans la section de refroidissement.

16. Dispositif selon l'une quelconque des revendications 14 ou 15, **caractérisé en ce que** d'autres dispositifs d'aspiration (24) sont prévus auxquels sont raccordées les conduites de fluide (17, 18), le fluide aspiré étant de nouveau réintroduit à un autre endroit de la section de refroidissement.

17. Dispositif selon l'une quelconque des revendications 14 à 16, **caractérisé en ce que** les distributeurs de fluide (19) et/ou les dispositifs d'aspiration (24) comprennent des tubes de collecte comportant des buses (25) ou ouvertures (26) réglables et s'étendant transversalement par rapport à la direction de transport du verre mousse.

18. Dispositif selon l'une quelconque des revendications 14 à 17, **caractérisé en ce que** chaque zone et/ou chaque segment comporte des distributeurs de fluide (19) et des dispositifs d'aspiration (24) interagissant de façon individuelle, de sorte que le réglage de la température se fait indépendamment pour chaque zone et/ou chaque segment.

19. Dispositif selon l'une quelconque des revendications 14 à 18, **caractérisé en ce qu'**un distributeur de fluide (19) et un dispositif d'aspiration (24) sont respectivement disposés de façon opposée dans la direction de transport de verre mousse, de façon à pouvoir régler un flux de fluide parallèlement ou à angle aigu, ou en diagonale ou de façon parallèlement opposée, par rapport à la direction de transport du verre mousse.

20. Dispositif selon l'une quelconque des revendications 14 à 19, **caractérisé en ce que** le distributeur de fluide (19) et le dispositif d'aspiration (24) sont réglables de telle sorte que le flux de fluide est plus important au centre du cordon de verre mousse qu'au niveau des bords.

21. Dispositif selon l'une quelconque des revendications 14 à 20, **caractérisé en ce que** les distributeurs de fluide (19) sont réalisés de telle sorte avec leurs buses (25) ou ouvertures (26) qu'un tourbillonnement est crée à la sortie du fluide.

22. Dispositif selon l'une quelconque des revendications 8 à 21, **caractérisé en ce que** chaque zone et/ou chaque segment comporte un dispositif de transport de verre mousse (8) propre.

23. Dispositif selon l'une quelconque des revendications 8 à 22, **caractérisé en ce que** la section de transport de verre mousse (8) se compose d'un ruban de mailles en fil métallique avec une largeur de maille telle que la capacité thermique est minimisée lorsque le soutien du cordon de verre mousse est suffisant.
